# EUROPEAN PATENT APPLICATION

(11) **EP 4 749 720 A1**
(43) Date of publication of application: **27.05.2026**
(21) Application number: 23945731.0
(22) Date of filing: 26.12.2023
(51) Int. Cl.: H01M 4/62, H01M 4/13, H01M 4/139

(54) **PRE-LITHIATED NEGATIVE ELECTRODE, COMPOSITE NEGATIVE ELECTRODE, PREPARATION METHOD, AND USE**

(30) Priority: 20.07.2023 CN 202310893885; 20.07.2023 CN 202310893749
(71) Applicant: China Energy Lithium Co., Ltd, Tianjin 300457 (CN)
(72) Inventor: WANG, Weizhou, Tianjin 300457 (CN); SUN, Zhaoyong, Tianjin 300457 (CN); BI, Weiyan, Tianjin 300457 (CN); CHEN, Qiang, Tianjin 300457 (CN)
(74) Representative: Witte, Weller & Partner Patentanwälte mbB
(86) International application number: PCT/CN2023/141960
(87) International publication number: WO 2025/015853

(57) **Abstract**

The negative electrode active material layer of the negative electrode of a lithium ion battery comprises a negative electrode active material (2) and a cocoon structured lithium-carbon material (3), wherein the cocoon structured lithium-carbon material (3) is dispersed in the negative electrode active material (2). The cocoon structured lithium-carbon material (3) comprises a cocoon body formed from a structural carbon material and one or more lithium-containing particles contained in the cocoon body. The negative electrode of the lithium ion battery has advantages of stable structure and controllable prelithiation degree. It can significantly improve the first coulombic efficiency and cycle life when used in combination with a conventional positive electrode. The preparation method has a simple process, so a large scale industrial production can be achieved.

## Description

### Technical Field

The present invention relates to the technical field of lithium batteries, and particularly to a prelithiated negative electrode, a composite negative electrode, and a preparation method and use thereof.

### Background

Lithium ion batteries have many advantages such as long cycle life, high energy density, and no memory effect, and are most widely used secondary batteries at present. Currently, materials commonly used for negative electrode in lithium ion battery comprise graphite, silicon-carbon materials, and silicon-oxygen materials. During the first charging/discharging process of a lithium ion battery, the formation of a SEI (solid electrolyte interface) on the surface of the negative electrode consumes a large amount of lithium, resulting in low first coulombic efficiency and significantly decreased practical specific energy of the lithium ion battery, which severely restricts the large scale commercial application of lithium ion batteries. Therefore, how to improve the first coulombic efficiency becomes a research hotspot.

Some progress has been made in prelithiation with metal lithium powder. Here, Tesla's patent CN 108780887 B discloses an electrode film comprising carbon particles, elemental metal and a fibrillizable binder; wherein the electrode film is free standing and has no residual solvent. The carbon particles comprise graphite particles, and the elemental metal comprises elemental lithium metal particles. The preparation method comprises combining the elemental lithium metal, a plurality of carbon particles, and the fibrillizable binder to form an electrode film mixture; and forming an electrode film from the electrode film mixture. That is, prelithiation is performed by mixing metal lithium powder and graphite. Metal lithium powder is very reactive, and needs to be stabilized before use. Common methods comprise forming a lithium carbonate layer or a lithium fluoride layer on the surface (like passivated lithium powder from FMC). However, the lithium carbonate layer or the lithium fluoride layer has a low conductivity, and the metal lithium powder forms voids in the negative electrode after it takes effect. This not only decreases the electrical conductivity of the negative electrode, but may also cause lithium dendrites to grow in the thinner areas of the negative electrode, which is not advantageous for improving the performance of the negative electrode.

CN114765254A discloses a negative electrode sheet prelithiation method, where metal lithium powder is mixed into the electrode sheet by a dry process to compensate lithium of the negative electrode consumed by the formation of SEI during the first charging/discharging process, thereby effectively increasing the energy density of the battery. However, after the metal lithium powder is passivated, the resultant passivation layer has a poor conductivity, reducing the utilization rate of the metal lithium powder. Pores or voids will be formed in the negative electrode after the metal lithium powder takes effect, resulting in non-uniform current density and easy formation of lithium dendrites during cycling. Furthermore, prelithiation can only solve the problem of low first coulombic efficiency, but cannot increase the capacity of the negative electrode.

CN102201565A discloses a high capacity metal lithium powder composite negative electrode, a preparation method and a multilayer composite electrode. The high capacity negative electrode is prepared by mixing metal lithium powder, a binder such as PVDF and a negative electrode material such as graphite. The metal lithium powder will react with PVDF, causing the adhesion of PVDF to decrease or even fail, and losing a portion of metal lithium simultaneously. Also, the problems of volume expansion and dendrite growth of metal lithium during cycling cannot be solved.

The urgent problem to be solved at present is to develop a prelithiated negative electrode which can accurately control the amount of lithium supplement, have a stable structure after prelithiation, prevent significant decrease in conductivity, and suppress dendrite growth, and a high capacity composite negative electrode which can make full use of metal lithium powder during cycling, and solve the problems of volume expansion and dendrite growth of metal lithium, while taking into account the specific capacity, the cycling performance and the rate performance.

### Summary

In view of the problems in the prior art, the present invention provides a prelithiated negative electrode, a composite negative electrode, and a preparation method and use thereof. Here, for the prelithiated negative electrode, a cocoon structured lithium-carbon material is used as the lithium supplementing agent, significantly improving the first coulombic efficiency of the lithium ion battery. The cocoon structured lithium-carbon material contains a structural carbon material having a good conductivity and a certain rigidity, so that it increases the utilization rate of the lithium-containing core, and can achieve the improvement in conductivity and structural stability of the prelithiated negative electrode, thereby accurately supplementing lithium. In addition, the cocoon structured lithium-carbon material is formed by building the structural carbon material on the surface of the lithium-containing particles such as metal lithium powder and/or lithium alloy powder. When the cocoon structured lithium-carbon material is used in a large quantity in the negative electrode active material layer, the structural carbon material can intertwine with each other to form a stable porous framework, which can effectively solve the problems of volume expansion and lithium dendrite growth of metal lithium during cycling, while improving the utilization rate of the lithium-containing particles.

In order to achieve this object, the following technical solutions are used in the present invention.

A lithium ion battery negative electrode, wherein the negative electrode comprises a negative electrode active material layer containing a negative electrode active material and a cocoon structured lithium-carbon material, wherein the cocoon structured lithium-carbon material is dispersed in the negative electrode active material, wherein the cocoon structured lithium-carbon material comprises a cocoon body formed from a structural carbon material and one or more lithium-containing particles contained in the cocoon body.

Depending on the content of the cocoon structured lithium-carbon material, the lithium ion battery negative electrodes of the present invention can be classified into prelithiated negative electrodes (with a small content of lithium-carbon material, mainly used for prelithiation) and composite negative electrodes (with a large content of lithium-carbon material, wherein the structural carbon material forms a porous framework in the negative electrode active material layer).

In a first aspect, the lithium ion battery negative electrode of the present invention is a prelithiated negative electrode, wherein the prelithiated negative electrode comprises a negative electrode active material and a cocoon structured lithium-carbon material, wherein the cocoon structured lithium-carbon material is dispersed in the negative electrode active material;
wherein a mass ratio of the negative electrode active material to the cocoon structured lithium-carbon material is in a range of 1 g: (1-300) mg; and
a mass ratio of the structural carbon material to the lithium-containing particles is in a range of 1: (1-1000).

In the present invention, the cocoon structured lithium-carbon material is used for supplementing lithium, and the lithium-containing particles are used as a lithium source, so as to accurately supplement lithium to the negative electrode. The cocoon body structure formed from the structural carbon material have a certain rigidity, and comes into good contact with the negative electrode active material, thereby providing support while constructing an electron pathway. Even if the lithium-containing particles are consumed, no obvious void will be formed and the internal resistance of the negative electrode will not be increased. Meanwhile, there is a good lithium ion pathway, which improves the ion conductivity of the prelithiated negative electrode, such that the requirements of the high rate charging and discharging can be met. The cocoon body structure of the structural carbon material can also absorb and retain the electrolyte solution, allowing the lithium-containing particles to fully utilize the capacity and overcoming the defect of lithium supplement with metal lithium powder. The prelithiated negative electrode has advantages such as high structural stability, long cycle life and good rate performance.

Optionally, the negative electrode active material comprises any one or a combination of at least two selected from the group consisting of graphite, a tin-based material, hard carbon, soft carbon, activated carbon, mesocarbon microbeads, a silicon-carbon (Si/C) material and a silicon-oxygen (SiOₓ (0<x≤2)) material.

Optionally, the structural carbon material comprises any one or a combination of at least two selected from the group consisting of a particulate carbon nanomaterial, a linear carbon nanomaterial, and a sheet-like carbon nanomaterial. Preferably, the structural carbon material comprises any one or a combination of at least two selected from the group consisting of acetylene black, Ketjen black, Cabot BP2000, Super P, single-walled carbon nanotubes, few-walled carbon nanotubes, multi-walled carbon nanotubes, doped carbon nanotubes, graphene, doped graphene, carbon nanofibers and doped carbon nanofibers, and preferably any one or a combination of at least two selected from the group consisting of single-walled carbon nanotubes, few-walled carbon nanotubes, multi-walled carbon nanotubes, doped carbon nanotubes, graphene and doped graphene.

Optionally, the doping elements for the doped carbon nanotubes, the doped graphene or the doped carbon nanofibers independently comprise any one or a combination of at least two selected from the group consisting of fluorine, nitrogen, oxygen, phosphorous, silver, silicon, tin, and zinc.

Optionally, the lithium-containing particles comprise metal lithium particles and/or lithium alloy particles, and preferably lithium alloy particles. After lithium supplement, a small amount of residue of the lithium alloy particles remains and forms a framework, which cooperates with the structural carbon material, so that no large void will be formed in the negative electrode, and the internal resistance of the negative electrode will not be increased, and at the same time, the deposition of metal lithium can be controlled, thereby achieving the lithium supplement while improving the cycling performance of the negative electrode.

Optionally, the mass content of the metal lithium in the lithium alloy particles is not less than 70%. For example, the mass content may be 70%, 72%, 75%, 80%, 83%, 85%, 88%, 90%, 93%, 95%, 97%, or 99%, including but not limited to the values as listed. If the mass content is too small, then more in-active lithium material will be introduced, which influences the energy density of the negative electrode. Thus, the mass content is preferably not less than 85%.

Optionally, the lithium-containing particles have an average particle size in a range from 1 to 100 µm. For example, the average particle size may be 1 µm, 3 µm, 5 µm, 10 µm, 15 µm, 20 µm, 25 µm, 30 µm, 40 µm, 50 µm, 60 µm, 70 µm, 80 µm, 90 µm or 100 µm, including but not limited to the values as listed. The average particle size is preferably in a range from 5 to 30 µm.

Optionally, the lithium alloy particles comprise a binary lithium alloy and/or a ternary lithium alloy, wherein the binary lithium alloy powder comprises any one or a combination of at least two selected from the group consisting of lithium-magnesium alloy, lithium-boron alloy, lithium-silver alloy, lithium-indium alloy, lithium-silicon alloy, lithium-aluminum alloy and lithium-tin alloy; and the ternary lithium alloy powder comprises any one or a combination of at least two selected from the group consisting of lithium-tin-silver alloy, lithium-silver-silicon alloy and lithium-boron-zinc alloy.

Optionally, a mass ratio of the structural carbon material to the lithium-containing particles is in a range of 1: (1-1000). For example, the mass ratio may be 1:1, 1:5, 1:10, 1:20, 1:50, 1:55, 1:60, 1:80, 1:90, 1:100, 1:120, 1:150, 1:200, 1:300, 1:400, 1:450, 1:480, 1:500, 1:550, 1:600, 1:700, 1:800, 1:900, 1:950 or 1:1000, including but not limited to the values as listed. The mass ratio is preferably in a range of 1: (10-500).

Optionally, an organic conducting layer is disposed between the lithium-containing particles and the structural carbon material, wherein the organic conducting layer comprises an organic lithium ion conducting agent and a conductive agent. The organic conducting layer facilitates the diffusion of lithium ions, further improving the ion conductivity of the prelithiated negative electrode.

The conductive agent comprises at least one selected from the group consisting of carbon nanotubes, carbon black, graphene, and acetylene black. The organic lithium ion conducting agent comprises one or a copolymer or mixture of at least two selected from the group consisting of polyethylene oxide, polyethylene glycol, polysiloxane, polytrimethylene carbonate, polycarbonate, polyethylene carbonate, polypropylene carbonate, polyvinylene carbonate, polyvinylidene fluoride, polyacrylonitrile, poly(methyl methacrylate), poly(vinylidene fluoride-co-hexafluoropropylene), polyphenylene sulfide, and p-benzoquinone.

A mass ratio of the lithium-containing particles, the organic lithium ion conducting agent and the conductive agent is in a range of (80-95): (1-10): (0.1-10), and preferably (90-95): (5-10): (0.5-5).

Optionally, the mass ratio of the negative electrode active material to the cocoon structured lithium-carbon material includes, but not limited to, 1 g: (1-300) mg. For example, the mass ratio may be 1 g: 1 mg, 1 g: 3 mg, 1 g: 5 mg, 1 g: 10 mg, 1 g: 15 mg, 1 g: 20 mg, 1 g: 30 mg, 1 g: 50 mg, 1 g: 100 mg, 1 g: 120 mg, 1 g: 150 mg, 1 g: 180 mg, 1 g: 200 mg, 1 g: 240 mg or 1 g: 300 mg, including but not limited to the specified values. The mass ratio may be selected depending on the type of the negative electrode active material, the type of the cocoon structured lithium-carbon material, the first coulombic efficiency and practical requirements. Typically, the first coulombic efficiency of the graphite negative electrode material is higher than that of the silicon-containing negative electrode material. With respect to the same type of cocoon structured lithium-carbon material, the actual required amount of the graphite negative electrode material is relatively small, and is preferably 1 g: (10-200) mg. If the mass ratio is too small, that is, the mass content of the cocoon structured lithium-carbon material is relatively large, the prelithiated negative electrode has the function of storing the lithium source in addition to the prelithiation effect, exhibiting the features of the composite negative electrode. During the cycling of the battery, the lithium source may be continuously supplemented, thereby further improving the cycling performance and energy density of the the prelithiated negative electrode.

In a second aspect, the present invention provides a method for preparing the prelithiated negative electrode of the first aspect as described above, comprising steps of:
(1) mixing a structural carbon material, lithium-containing particles and an organic solvent, and then spray drying or stirring the resultant mixture at a rotation speed of 5000 rpm or more to obtain a cocoon structured lithium-carbon material; and
(2) mixing a negative electrode active material, a conductive agent and a first binder and then performing a binder fibrillation to obtain a first mixture, then mixing the first mixture and the cocoon structured lithium-carbon material to obtain a second mixture, hot pressing the second mixture into a negative electrode active material layer, and then bonding the negative electrode active material layer with a current collector to obtain the prelithiated negative electrode; or
mixing a negative electrode active material, a conductive agent, a second binder, the cocoon structured lithium-carbon material and an organic solvent to prepare a negative electrode slurry, and then applying the negative electrode slurry on a surface of a current collector to obtain the prelithiated negative electrode.

In the present invention, whether in a dry process (without any organic solvent) or in a wet process (with an organic solvent), the cocoon structured lithium-carbon material may be used as the lithium source, which is mixed into the battery system during the material blending, to directly prepare a prelithiated negative electrode. The prelithiated negative electrode is preferably prepared by the dry process. By using the dry process, a high energy density negative electrode can be prepared, and the morphology of the cocoon structured lithium-carbon material can be better maintained.

Optionally, Step (1) further comprises the following operations: (a) mixing the lithium-containing particles, the organic lithium ion conducting agent and the conductive agent to form particles composed of the lithium-containing particles and an organic conducting layer coated on their surface; and
(b) uniformly mixing the particles obtained with the structural carbon material in an organic solvent to obtain a mixture, and then spray drying the mixture or stirring the mixture at a high speed to obtain the cocoon structured lithium-carbon material. The operations build an organic ion conducting layer on the surface of the lithium-containing particles, which facilitates the diffusion of lithium ions, thereby further improving the ion conductivity of the prelithiated negative electrode.

Optionally, the mixing of the lithium-containing particles, the organic lithium ion conducting agent and the conductive agent may be performed in the presence of an organic solvent, and then the organic solvent is removed. The organic solvent may comprise N-methylpyrrolidone (NMP), ethanol, n-hexane, liquid paraffin, tetrahydrofuran, p-xylene and the like.

Optionally, the organic solvent in Step (1) is any one or a combination of at least two selected from the group consisting of N-methylpyrrolidone, a liquid alkane having 5-10 carbon atoms, benzene, p-xylene, and petroleum ether.

Optionally, the conditions for spray drying in Step (1) comprise: an inlet air temperature of 180-240°C, such as 180°C, 185°C, 190°C, 195°C, 200°C, 205°C, 215°C and 220°C, and preferably 200-220°C; an outlet air temperature of 90-1 10°C, such as 90°C, 95°C, 100°C, 105°C and 1 10°C, and preferably 100-1 10°C; and an atomization pressure of 0.1-0.5 MPa, such as 0.2 MPa, 0.25 MPa, 0.3 MPa, 0.35 MPa and 0.4 MPa, and preferably0.2-0.4 MPa.

Optionally, the high speed stirring in Step (1) is performed at a rotation speed of 6000-15000 rpm for 0.5-10 min. For example, the rotation speed may be 6000 rpm, 6500 rpm, 7000 rpm, 7500 rpm, 8000 rpm, 8500 rpm, 9000 rpm, 10000 rpm, 11000 rpm, 11500 rpm, 12000 rpm, 12500 rpm, 13000 rpm, 14000 rpm, 14500 rpm or 15000 rpm, and the duration may be 0.5 min, 1 min, 1.5 min, 2 min, 2.5 min, 3 min, 3.5 min, 4 min, 4.5 min, 5 min, 6 min, 7 min, 8 min, 9 min, 9.5 min or 10 min. Preferably, the rotation speed is 8000-12000 rpm, and the duration is 1-5 min.

Optionally, the first binder in Step (2) comprises any one or a combination of at least two selected from the group consisting of polyvinylidene fluoride, vinylidene fluoride-hexafluoropropylene copolymer, polyethylene oxide, polyisobutene, polytetrafluoroethylene and sodium carboxymethyl cellulose.

Optionally, the organic solvent in Step (2) comprises any one or a combination of at least two selected from the group consisting of N-methylpyrrolidone, a liquid alkane having 5-10 carbon atoms, benzene, p-xylene, and petroleum ether, and preferably any one or a combination of at least two selected from the group consisting of p-xylene, n-hexane and heptane.

In the present invention, the type of the conductive agent is not particularly limited. The conductive agent includes, but not limited to, any one or a combination of at least two selected from the group consisting of acetylene black, Ketjen black, conductive graphite, Cabot carbon black and Super P. Any type of the conductive agent commonly used by those skilled in the art can be used in the present invention.

In the present invention, the type of the binder is not particularly limited. The second binder includes, but not limited to, any one or a combination of at least two selected from the group consisting of polyvinylidene fluoride, butadiene styrene rubber, polystyrene, polyisobutene, styrene-butadiene-styrene block copolymer, and styrene-ethylene-butene-styrene block copolymer. Any type of the binder commonly used by those skilled in the art can be used in the present invention.

Optionally, a mass ratio of the conductive agent, the first binder or second binder and the negative electrode active material is in a range of (1-10): (1-10): (80-98), and preferably (2-5): (2-5): (90-96).

In some preferred embodiments of the present invention, the negative electrode slurry in Step (2) is prepared through steps of:
(a) first mixing the negative electrode active material, the conductive agent, the second binder and the organic solvent, and then adding the cocoon structured lithium-carbon material for a second mixing, to prepare the negative electrode slurry;
   wherein the second mixing is performed at a rotation speed of 3000-5000 rpm for 30-60 min; the mixing time may be 30 min, 35 min, 40 min, 45 min, 50 min, 55 min or 60 min, and the rotation speed may be 3000 rpm, 3200 rpm, 3500 rpm, 4000 rpm, 4500 rpm, 4800 rpm or 5000 rpm; the mixing time and rotation speed include, but not limited to, those values as listed, and may be adjusted depending on the actual process; and
(b) applying the negative electrode slurry on the surface of the current collector to obtain the prelithiated negative electrode.

As compared to prior art, the prelithiated negative electrode of the present invention and the preparation method thereof have at least one of the following advantageous effects.
(1) In the prelithiated negative electrode provided by the present invention, the cocoon structured lithium-carbon material, used as a lithium supplementing agent, is uniformly mixed with the negative electrode active material, and comes into good contact with it. No obvious voids are formed in the negative electrode, and the internal resistance is not increased. Thus, the prelithiated negative electrode has higher first coulombic efficiency and structural stability.
(2) In the present invention, by selecting the type of the lithium-containing particles, and adjusting the parameters such as the mass ratio of the lithium-carbon material to the lithium-containing particles, the first coulombic efficiency and cycling performance of the prelithiated negative electrode are further improved.
(3) The preparation method provided by the present invention is easy to operate and has high production efficiency. Especially, the applying process is different from that in the prior art. The solvent and binder used are friendly to metal lithium. This provides a new idea for accurately supplementing lithium to a negative electrode.

In a third aspect, the lithium ion battery negative electrode of the present invention is a composite negative electrode comprising a current collector and a negative electrode active material layer disposed on at least one side of the current collector, wherein the negative electrode active material layer is composed of, in parts by weight: 40-78 parts of a negative electrode material; 20-50 parts of a cocoon structured lithium-carbon material; 1-5 parts of a conductive agent; and 1-5 parts of a binder, wherein a sum of parts by weight of all components is 100 parts by weight; wherein the cocoon structured lithium-carbon material comprises a cocoon body formed from a structural carbon material and one or more lithium-containing particles contained in the cocoon body.

In the present invention, the structural carbon material forms the cocoon body on the lithium-containing particles, and builds a continuous and stable 3D electron network pathway, which results in good conductivity and improves the utilization rate of the lithium-containing particles in the composite negative electrode. The cocoon body confines the lithium-containing particles, effectively mitigating the problem of volume expansion of the lithium-containing particles in the composite negative electrode during cycling. In the composite negative electrode, microscale/nanoscale texture is formed from the structural carbon material on the surface of the cocoon structured lithium-carbon material, which is relatively rough, and has a certain degree of flexibility and ductility, allowing for good contact with the negative electrode material, the conductive agent and the binder. Even if pores or voids are formed after the lithium-containing particles take effect, the cocoon body can still maintain unobstructed electron pathway, and adjust the current density to be uniform, thereby effectively solving the problem of lithium dendrite growth due to non-uniform current density and resulting in good cycling performance and rate performance.

The parts by weight of the cocoon structured lithium-carbon material and the negative electrode material are designed such that the cocoon structured lithium-carbon material can not only be used as a prelithiation agent to improve the first coulombic efficiency of the negative electrode material, but also be used as a lithium source to continuously supplement lithium ions during cycling, thereby improving the capacity and cycling performance of the composite negative electrode. If the content in parts by weight of the cocoon structured lithium-carbon material is too small, it can only functions as the prelithiation agent, but cannot compensate the loss of lithium ions during cycling. If the content in parts by weight of the cocoon structured lithium-carbon material is too large, the composite negative electrode exhibits performances similar to the metal lithium negative electrode, resulting in significantly decreased cycle life. The combined use of the cocoon structured lithium-carbon material and the negative electrode material can not only overcome the problems in the use of a single negative electrode material or a cocoon structured lithium-carbon material, but also reduce the amounts of the conductive agent and the binder in the composite negative electrode.

In the present invention, the type of the current collector is not particularly limited. The current collector may be a common copper foil, a carbon-coated copper foil, a composite copper foil, a copper mesh, a nickel foil, or a nickel mesh. Any type of current collector commonly used by those skilled in the art is suitable for the present invention.

Optionally, the negative electrode active material layer is composed of, in parts by weight: 44-68 parts of the negative electrode material; 30-50 parts of the cocoon structured lithium-carbon material; 1-3.5 parts of the conductive agent; and 1-2.5 parts of the binder. The composition, in parts by weight, fully reflects the advantages of the cocoon structured lithium-carbon material. The cocoon structured lithium-carbon material not only can be used as a prelithiation agent to improve the first coulombic efficiency of the negative electrode material, but also can improve the capacity and cycling performance of the negative electrode. In addition, the lithium-containing particles are viscous, which can reduce the amount of the binder in the negative electrode. The cocoon body has a good conductivity, which can reduce the amount of the conductive agent in the negative electrode.

Optionally, the lithium-containing particles comprise metal lithium powder and/or lithium alloy powder, and preferably lithium alloy powder. Some residues are remained after the lithium alloy powder takes effect. The residues can guide the deposition of metal lithium during cycling, and can also maintain the structural stability of the composite negative electrode.

Optionally, the lithium alloy powder comprises any one or a combination of at least two selected from the group consisting of lithium-boron alloy, lithium-silver alloy, lithium-tin alloy, lithium-silicon alloy, lithium-zinc alloy, lithium-indium alloy, lithium-aluminum alloy and lithium-magnesium alloy, and preferably comprises any one or a combination of at least two selected from the group consisting of lithium-boron alloy, lithium-indium alloy, lithium-silver alloy and lithium-magnesium alloy.

Optionally, the lithium-containing particles have an average particle size in a range from 1 to 100 µm, such as 1 µm, 3 µm, 5 µm, 7 µm, 10 µm, 15 µm, 20 µm, 30 µm, 40 µm, 45 µm, 50 µm, 60 µm, 70 µm, 80 µm, 90 µm or 100 µm, and preferably in a range from 10 to 50 µm. The average particle size of the metal lithium powder and/or the lithium alloy powder may be obtained by testing with a laser particle size analyzer under a protective atmosphere.

Optionally, the structural carbon material comprises a carbon micro/nano material, as long as one dimension thereof is microscale or nanoscale. The carbon micro/nano material comprises any one or a combination of at least two selected from the group consisting of graphene nanosheets, graphene nanobelts, multi-walled carbon nanotubes, single-walled carbon nanotubes, carbon fibers and few-walled carbon nanotubes, including but not limited to a combination of graphene nanosheets and few-walled carbon nanotubes, a combination of multi-walled carbon nanotubes and single-walled carbon nanotubes, a combination of graphene nanobelts and carbon fibers, and a combination of single-walled carbon nanotubes and nickel nanowires, and preferably comprises any one or a combination of at least two selected from the group consisting of graphene nanosheets, single-walled carbon nanotubes and few-walled carbon nanotubes.

Optionally, the mass ratio of the lithium-containing particles to the structural carbon material is in a range of (1-1000):1, such as 1:1, 5:1, 10:1, 30:1, 50:1, 100:1, 120:1, 150:1, 200:1, 300:1, 400:1, 500:1, 600:1, 700:1, 750:1, 800:1, 850:1, 900:1, 950:1 and 1000:1. If the mass ratio is too small, the carbon micro/nano material will be prone to self-entanglement, and will not be uniformly distributed on the surface of the lithium-containing particles, reducing the energy density of the composite material. If the mass ratio is too large, no stable framework can be formed. The mass ratio is preferably in a range of (10-500):1.

Optionally, the lithium-containing particles comprise metal lithium powder and lithium alloy powder. The mass ratio of the metal lithium powder to the lithium alloy powder is in a range of (0.5-50):1, such as 0.5:1, 0.8:1, 1:1, 1.5:1, 3:1, 5:1, 8:1, 10:1, 15:1, 20:1, 25:1, 30:1, 35:1, 40:1, 45:1 and 50:1. If the mass ratio is too small, the specific capacity of the composite negative electrode will be low, which is not advantageous for improving the energy density. If the mass ratio is too large, the improvement in cycling performance of the composite negative electrode will be limited. The mass ratio is preferably in a range of (1-30):1.

Optionally, the negative electrode material comprises any one or a combination of at least two selected from the group consisting of graphite, a tin-based material, hard carbon, soft carbon, mesocarbon microbeads, a silicon-carbon material and a silicon-oxygen material.

Optionally, the conductive agent comprises any one or a combination of at least two selected from the group consisting of acetylene black, Ketjen black, Cabot carbon black, conductive graphite, Super P, carbon nanotubes, carbon fibers and graphene.

Optionally, the binder comprises any one or a combination of at least two selected from the group consisting of polyvinylidene fluoride, polytetrafluoroethylene, vinylidene fluoride-hexafluoropropylene copolymer, sodium carboxymethyl cellulose, butadiene styrene rubber, polystyrene, polyisobutene, styrene-butadiene-styrene block copolymer, and styrene-ethylene-butene-styrene block copolymer.

In a fourth aspect, the present invention provides a method for preparing the composite negative electrode as described above, comprising steps of:
(1) mixing a negative electrode material, a conductive agent and a binder and performing a binder fibrillation to obtain a mixture; and
(2) mixing the mixture obtained in Step (1) and a cocoon structured lithium-carbon material, then hot pressing it into a negative electrode active material layer, and arranging the negative electrode active material layer on at least one side of a current collector to obtain the composite negative electrode.

In the present invention, by using a dry process, the cocoon structured lithium-carbon material is mixed with a mixture obtained after the binder fibrillation, such that the morphology of the cocoon structure can be well maintained, and no cocoon structured lithium-carbon material is consumed during the preparation. The composite negative electrode obtained has a relatively high energy density.

In the present invention, the method for preparing the cocoon structured lithium-carbon material is not particularly limited. Any cocoon structured lithium-carbon material composed of a cocoon body formed from a structural carbon material and one or more lithium-containing particles contained in the cocoon body falls within the protection scope of the present invention.

For example, the structural carbon material is dispersed in an organic solvent such as n-hexane and p-xylene, and then lithium-containing particles are added. The mixture is stirred at a rotation speed of 5000 rpm or more and/or spray granulated to obtain the cocoon structured lithium-carbon material. The lithium-containing particles comprise metal lithium powder and/or lithium alloy powder, which is very reactive in the air. The steps of the method are all carried out under a protective atmosphere, such as argon and/or nitrogen.

Optionally, the device for the binder fibrillation in Step (1) is not particularly limited, including, but not limited to, any one or a combination of at least two selected from the group consisting of planetary high speed dispersing devices, ultrasonic gasification devices, and ultra-high shear devices, preferably ultra-high shear devices.

Optionally, the temperature for the binder fibrillation in Step (1) is in a range of 50-150°C, such as 50°C, 55°C, 60°C, 70°C, 80°C, 90°C, 95°C, 100°C, 105°C, 1 10°C, 120°C, 130°C, 140°C and 150°C, including but not limited to those values as listed. Any value within the above numerical range falls within the protection scope of the present invention. The temperature is preferably in a range of 90-1 10°C.

Optionally, the device for the mixing in Step (2) is not particularly limited, including, but not limited to, any one or a combination of at least two selected from the group consisting of V-type mixers, drum mixers, and planetary high speed dispersing devices, preferably V-type mixers and/or drum mixers.

Optionally, the duration for the mixing in Step (2) is in a range of 10-60 min, such as 10 min, 15 min, 20 min, 25 min, 30 min, 40 min, 45 min, 50 min and 60 min, including but not limited to those values as listed. Any value within the above numerical range falls within the protection scope of the present invention. The duration is preferably in a range of 20-45 min.

Optionally, the rotation speed for the mixing in Step (2) is in a range of 2000-5000 rpm, such as 2000 rpm, 2500 rpm, 3000 rpm, 3500 rpm, 4000 rpm, 4500 rpm and 5000 rpm, including but not limited to those values as listed. Any value within the above numerical range falls within the protection scope of the present invention. The rotation speed is preferably in a range of 3000-4500 rpm.

Optionally, the temperature for the hot pressing in Step (2) is in a range of 80-120°C, such as 80°C, 85°C, 90°C, 95°C, 100°C, 105°C, 110°C, 115°C and 120°C, including but not limited to those values as listed. Any value within the above numerical range falls within the protection scope of the present invention. The temperature is preferably in a range of 90-1 10°C.

Optionally, the pressure for the hot pressing in Step (2) is in a range of 10-50 t, such as 10 t, 15 t, 20 t, 25 t, 30 t, 35 t, 40 t, 45 t and 50 t, and is preferably in a range of 20-40 t.

In a further preferred embodiment of the present invention, the method comprises steps of:
(1) mixing 44-68 parts of a negative electrode material, 1-3.5 parts of a conductive agent and 1-2.5 parts of a binder, and performing a binder fibrillation at a temperature of 90-1 10°C to obtain a mixture;
   wherein the negative electrode material comprises any one or a combination of at least two selected from the group consisting of graphite, a tin-based material, hard carbon, soft carbon, mesocarbon microbeads, a silicon-carbon material and a silicon-oxygen material;
   the conductive agent comprises any one or a combination of at least two selected from the group consisting of acetylene black, Ketjen black, Cabot carbon black, conductive graphite, Super P, carbon nanotubes, carbon fibers and graphene; and
   the binder comprises any one or a combination of at least two selected from the group consisting of polyvinylidene fluoride, polytetrafluoroethylene, vinylidene fluoride-hexafluoropropylene copolymer, sodium carboxymethyl cellulose, butadiene styrene rubber, polystyrene, polyisobutene, styrene-butadiene-styrene block copolymer, and styrene-ethylene-butene-styrene block copolymer; and
(2) mixing the mixture obtained in Step (1) and 30-50 parts of a cocoon structured lithium-carbon material at a speed of 3000-4500 rpm for 20-45 min, then hot pressing it into a negative electrode active material layer at a temperature of 90-110°C and a pressure of 20-40 t, and arranging the negative electrode active material layer on at least one side of a current collector to obtain the composite negative electrode.

The composite negative electrode of the present invention and the preparation method thereof have at least one of the following advantageous technical effects.
1. In the composite negative electrode provided by the present invention, the cocoon structured lithium-carbon material has the structural carbon material with good conductivity built on the surface thereof, thereby improving the utilization rate of the lithium-containing particles while mitigating the problem of volume expansion. The surface of the cocoon structured lithium-carbon material is relatively rough, and has a certain degree of flexibility and ductility, allowing for good contact with the negative electrode material, the conductive agent and the binder. This can adjust the current density, thereby effectively solving the problem of lithium dendrite growth due to non-uniform current density and resulting in good cycling performance and rate performance of the composite negative electrode.
2. In the composite negative electrode provided by the present invention, the cocoon structured lithium-carbon material which is uniformly dispersed can not only be used as a lithium supplementing agent to improve the first coulombic efficiency of the negative electrode, but also be used as a lithium source to improve the specific capacity of the negative electrode while supplementing lithium ions continuously consumed during cycling. The rational design for the parts by weight of the cocoon structured lithium-carbon material and the negative electrode material and the reduced amounts of the conductive agent and the binder in the composite negative electrode can balance the specific capacity, cycling performance and rate performance.
3. In the present invention, by optimizing the parameters such as the mass ratio of the lithium-containing particles to the structural carbon material in the cocoon structured lithium-carbon material, and the parts by weight of the components in the negative electrode active material layer, the cycling performance and the rate performance of the composite negative electrode are further improved.
4. In the method for preparing a composite negative electrode provided by the present invention, by using a dry process, no cocoon structured lithium-carbon material will be consumed during the preparation process. The structure design for the cocoon structured lithium-carbon material allows good contact with the negative electrode material, the conductive agent and the binder, thereby improving the specific capacity and structural stability of the composite negative electrode. The preparation method is simple and easy to implement, and is easy to industrialize.

In a fifth aspect, the present invention provides an energy storage device comprising the prelithiated negative electrode of the first aspect as described above or the composite negative electrode of the third aspect as described above. The energy storage device includes, but not limited to, a lithium ion battery and a lithium ion supercapacitor.

### Brief Description of Drawings

Fig. 1 is a schematic diagram of a prelithiated negative electrode according to the present invention;
   1: current collector, 2: negative electrode active material, 3: cocoon structured lithium-carbon material
Fig. 2 is a SEM image of the cocoon structured lithium-carbon material in Example 4;
Fig. 3 is a sectional SEM image of the prelithiated negative electrode in Example 4;
Fig. 4 is a SEM image of the cocoon structured lithium-carbon material in Example 9;

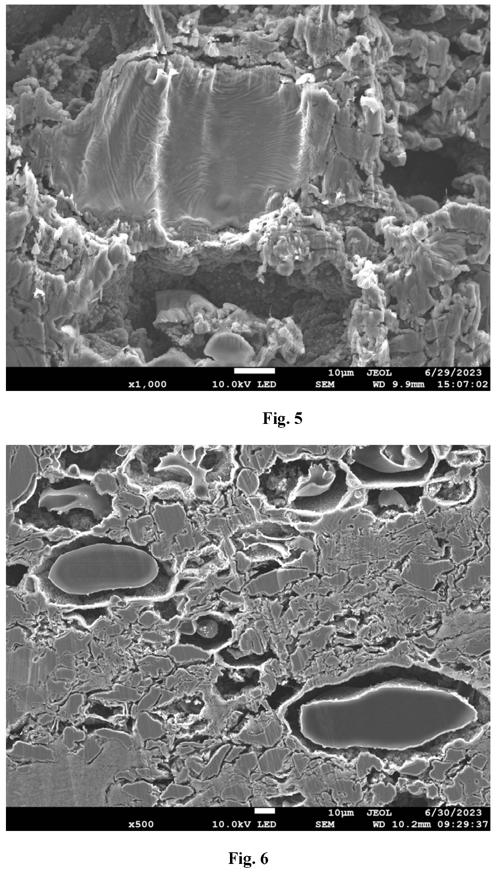

Fig. 5 is a sectional SEM image of the composite negative electrode in Example 9; and
Fig. 6 is a sectional SEM image of the composite negative electrode in Comparative Example 4.

### Detailed Description

In order to facilitate understanding the present invention, the embodiments of the present invention are set forth below. It will be appreciated by those skilled in the art that the embodiments are merely for the purpose of helping understand the present invention, but should not be regarded as limiting the present invention.

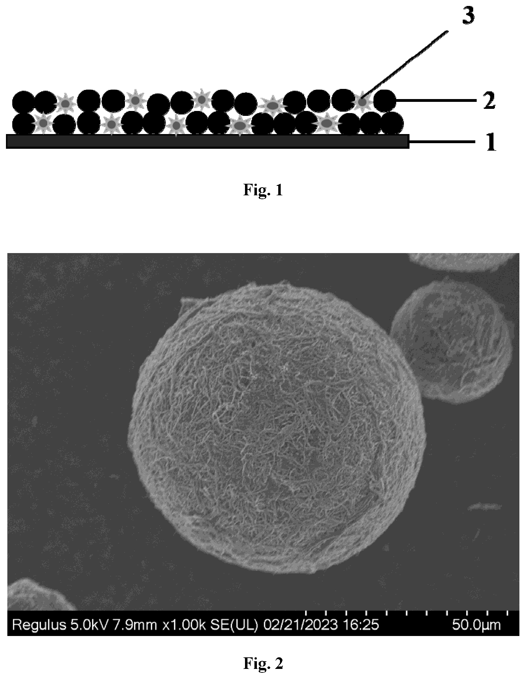

For example, the present invention provides a prelithiated negative electrode, and a schematic diagram of the prelithiated negative electrode is as shown in Fig. 1. The prelithiated negative electrode comprises a current collector 1 with a negative electrode active material 2 and a cocoon structured lithium-carbon material 3 provided on its surface. The cocoon structured lithium-carbon material 3 is dispersed in and uniformly mixed with the negative electrode active material 2. The cocoon structured lithium-carbon material comprises a cocoon body formed from a structural carbon material and one or more lithium-containing particles contained in the cocoon body (see the SEM image as shown in Fig. 2). The cocoon body comes into good contact with the negative electrode active material 2, constructing a good electron pathway. No obvious void will be formed in the negative electrode after lithium supplement, and the internal resistance will not be increased. The prelithiated negative electrode has relatively high first coulombic efficiency and structural stability.

### Example 1

The present example provides a prelithiated negative electrode comprising graphite and a cocoon structured lithium-carbon material, wherein the cocoon structured lithium-carbon material is dispersed in the graphite.

The method for preparing the prelithiated negative electrode comprises steps of:
(1) mixing graphene (XF001W 7440-44-0, from XFNANO Materials Co., Ltd, Jiangsu), multi-walled carbon nanotubes (XFM01 1333-86-4, from XFNANO Materials Co., Ltd, Jiangsu), Cabot BP2000, metal lithium powder with an average particle size of 5 µm and n-hexane, in a mass ratio of a total of the graphene, the multi-walled carbon nanotubes, and the Cabot BP2000 to the metal lithium powder of 1:1000, and then high speed dispersing the mixture at a rotation speed of 5000 rpm for 10 min to obtain a cocoon structured lithium-carbon material; and
(2) mixing graphite, acetylene black, and butadiene styrene rubber (SBR, 1502, from Petro China Jilin Petrochemical Company) in amounts of 800 g, 100 g and 100 g in n-hexane as a solvent to prepare a first slurry, then adding 8 g of the cocoon structured lithium-carbon material into the first slurry, stirring the mixture at a rotation speed of 3000 rpm for 60 min to obtain a second slurry, then applying the second slurry on the surface of a 6 µm carbon-coated copper foil, and oven drying it to obtain the prelithiated negative electrode.

### Example 2

The present example provides a prelithiated negative electrode comprising a silicon-carbon material and a cocoon structured lithium-carbon material, wherein the cocoon structured lithium-carbon material is dispersed in the silicon-carbon material.

The method for preparing the prelithiated negative electrode comprises steps of:
(1) mixing acetylene black, polyethylene oxide (P432440 from Aladdin) and metal lithium powder in p-xylene in a mass ratio of 5:5:90, and removing p-xylene by drying, thereby forming metal lithium powder containing an organic conducting layer;
(2) mixing single-walled carbon nanotubes, the metal lithium powder containing an organic conducting layer with an average particle size of 45 µm and n-hexane, in a mass ratio of the single-walled carbon nanotubes to the metal lithium powder of 1:500, and then high speed dispersing the mixture at a rotation speed of 8000 rpm for 8 min to obtain a cocoon structured lithium-carbon material; and
(3) mixing a silicon-carbon material (DXB8 from BTR), carbon fibers, and polyvinylidene fluoride (5130 from Solvay) in amounts of 800 g, 100 g and 100 g in N-methylpyrrolidone as a solvent to prepare a first slurry, then adding 160 g of the cocoon structured lithium-carbon material into the first slurry, stirring the mixture at a rotation speed of 4500 rpm for 45 min to obtain a second slurry, then applying the second slurry on the surface of a 6 µm carbon nanotube paper, and oven drying it to obtain the prelithiated negative electrode.

### Example 3

The present example provides a prelithiated negative electrode comprising a silicon-oxygen material and a cocoon structured lithium-carbon material, wherein the cocoon structured lithium-carbon material is dispersed in the silicon-oxygen material.

The method for preparing the prelithiated negative electrode comprises steps of:
(1) mixing carbon nanofibers (C478418 from Aladdin), a conductive graphite (KS-6), lithium-magnesium alloy particles (with a magnesium mass fraction of 10%) with an average particle size of 100 µm and p-xylene, in a mass ratio of a total of the single-walled carbon nanotubes and the conductive carbon black to the metal lithium powder of 1:100, and then high speed dispersing the mixture at a rotation speed of 12000 rpm for 5 min to obtain a cocoon structured lithium-carbon material; and
(2) mixing a silicon-oxygen material (DXA5 from BTR), Super P, and polyisobutene (P418837 from Aladdin) in heptane as a solvent in amounts of 800 g, 100 g and 100 g to prepare a first slurry, then adding 240 g of the cocoon structured lithium-carbon material into the first slurry, stirring the mixture at a rotation speed of 4500 rpm for 45 min to obtain a second slurry, then applying the second slurry on the surface of a 6 µm perforated copper foil, and oven drying it to obtain the prelithiated negative electrode.

### Example 4

The present example provides a prelithiated negative electrode comprising graphite and a cocoon structured lithium-carbon material, wherein the cocoon structured lithium-carbon material is dispersed in the graphite.

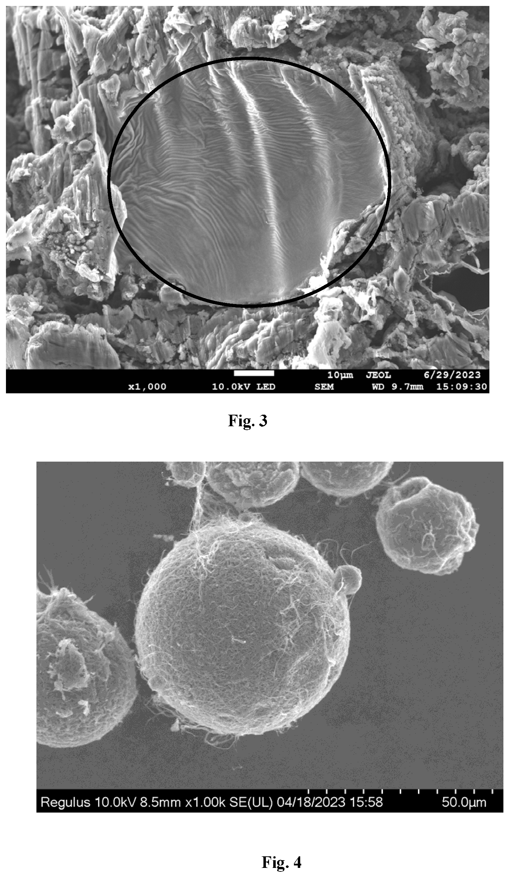

The method for preparing the prelithiated negative electrode comprises steps of:
(1) mixing single-walled carbon nanotubes (XFS02 1333-86-4, from XFNANO Materials Co., Ltd, Jiangsu), metal lithium powder with an average particle size of 50 µm and n-hexane, in a mass ratio of the single-walled carbon nanotubes to the metal lithium powder of 1:500, and spray drying the mixture with an inlet air temperature of 220°C, an outlet air temperature of 100°C, and an atomization pressure of 0.5 MPa to obtain a cocoon structured lithium-carbon material, where the SEM characterization image of the cocoon structured lithium-carbon material is as shown in Fig. 2; as clearly seen from the figure, the single-walled carbon nanotubes are wound around the surface of the metal lithium powder to form a cocoon body, and the cocoon body contains metal lithium powder to form the cocoon structured lithium-carbon material; and
(2) mixing graphite, acetylene black and polytetrafluoroethylene in amounts of 900 g, 50 g and 50 g, then treating the mixture with an ultra-high shear device to subject the polytetrafluoroethylene to a binder fibrillation, adding 180 g of the cocoon structured lithium-carbon material, extruding and calendaring the mixture at 80°C to obtain a negative electrode film sheet with a thickness of 120 µm, and bonding the negative electrode film sheet with a carbon-coated copper foil by hot pressing to obtain the prelithiated negative electrode; where the SEM characterization section image of the prelithiated negative electrode is as shown in Fig. 3; as clearly seen from the figure, the cocoon structured lithium-carbon material (the portion inside the black circle in the figure) is uniformly dispersed in the graphite and other materials (the portion outside the black circle in the figure), maintaining a good cocoon structure.

### Example 5

The conditions were the same as in Example 4 only except that the amount of the cocoon structured lithium-carbon material in Step (2) was changed to 0.9 g.

### Example 6

The conditions were the same as in Example 4 only except that the amount of the cocoon structured lithium-carbon material in Step (2) was changed to 300 g.

### Example 7

The conditions were the same as in Example 4 only except that the metal lithium powder in Step (1) was replaced with a lithium-indium alloy powder with an indium mass fraction of 20%.

### Comparative Example 1

The conditions were the same as in Example 4 only except that the cocoon structured lithium-carbon material in Step (2) was replaced with the metal lithium powder in Step (1).

### Comparative Example 2

The conditions were the same as in Example 4 only except that no cocoon structured lithium-carbon material was added in Step (2).

### Comparative Example 3

The conditions were the same as in Example 4 only except that the rotation speed in Step (1) was changed to 2000 rpm. At this rotation speed, the single-walled carbon nanotubes were sufficiently mixed with the metal lithium powder, but no cocoon structure was formed.

Performance tests for the negative electrodes:
The negative electrodes of Examples 1-7 and Comparative Examples 1-3 were assembled with lithium nickel cobalt manganese oxide positive electrodes respectively to form soft pack batteries for testing. The data for the first coulombic efficiency and cycling tests at 0.2C are shown in Table 1 below.

**Table 1**

| Example Number | First Coulombic Efficiency (%) | Capacity Retention after 100 cycles (%) |
|---|---|---|
| Example 1 | 96.5 | 99.4 |
| Example 2 | 97.1 | 91.1 |
| Example 3 | 96.8 | 90.3 |
| Example 4 | 97.6 | 98.7 |
| Example 5 | 85.1 | 95.2 |
| Example 6 | 98.3 | 99.6 |
| Example 7 | 96.7 | 99.3 |
| Comparative Example 1 | 93.2 | 92.8 |
| Comparative Example 2 | 84.0 | 91.3 |
| Comparative Example 3 | 92.4 | 94.6 |

The following observations can be obtained from Table 1.
(1) With reference to Examples 4-6, the prelithiation degree is closely related to the amount of the cocoon structured lithium-carbon material, where in the case of smaller amount (Example 5), the first coulombic efficiency and the cycling performance are not significantly improved; and in the case of too large amount (Example 6), the first coulombic efficiency and the cycling performance are significantly improved, but it is not advantageous for preparing a battery with a high energy density.
(2) With reference to Example 4 and Example 7, the battery corresponding to Example 4 has a first coulombic efficiency close to that for Example 7, but the cycling performance is poorer than that for Example 7, because the lithium-indium alloy was used to supplement lithium in Example 7. Indium can regulate the deposition of metal lithium, and can also conduct electrons. It cooperates with the structural carbon material of single-walled carbon nanotubes to make the negative electrode exhibit excellent cycling performance.
(3) With reference to Example 4 and Comparative Examples 1-3, when supplementing the same amount of lithium supplementing agent, the prelithiation agents with different structures have different degrees of improvement on the first coulombic efficiency and the cycling performance of the negative electrodes. When the lithium-carbon material having a core-shell structure according to the present invention is used as the lithium supplementing agent, the cocoon structured lithium-carbon material comprising a structural carbon material with a good conductivity and a certain rigidity can improve the conductivity and structural stability of the prelithiated negative electrode, such that the prelithiated negative electrode has relatively high first coulombic efficiency and excellent cycling performance.

### Example 8

The present example provides a composite negative electrode comprising a copper foil and a negative electrode active material layer on one side of the copper foil, wherein the negative electrode active material layer is composed of, in parts by weight: 40 parts of graphite, 50 parts of a cocoon structured lithium-carbon material, 5 parts of multi-walled carbon nanotubes, and 5 parts of polytetrafluoroethylene; and the cocoon structured lithium-carbon material comprises a cocoon body formed from graphene sheets and metal lithium powder contained in the cocoon body.

The method for preparing the composite negative electrode comprises steps of:
(1) high speed dispersing 60 g of metal lithium powder with an average particle size of 10 µm, 60 g of a structural carbon material of graphene sheets and 300 g of n-hexane at a rotation speed of 8000 rpm for 30 min, suction filtering the mixture and oven drying it to obtain a cocoon structured lithium-carbon material;
(2) dry mixing graphite (AGP-7 from BTR), multi-walled carbon nanotubes and polytetrafluoroethylene in the parts by weight, and then performing a binder fibrillation in an ultra-high shear device at a temperature 50°C to obtain a mixture; and
(3) mixing the mixture obtained in Step (2) with the cocoon structured lithium-carbon material in the parts by weight in a V-type mixer at a mixing speed of 5000 rpm for 10 min, then hot pressing it at 80°C under a pressure of 50 t to obtain a negative electrode active material layer, and then attaching the negative electrode active material layer to a copper foil by pressure bonding to obtain the composite negative electrode.

### Example 9

The present example provides a composite negative electrode comprising a carbon-coated copper foil and negative electrode active material layers on both sides of the carbon-coated copper foil, wherein the negative electrode active material layer is composed of, in parts by weight: 78 parts of a silicon-carbon material, 20 parts of a cocoon structured lithium-carbon material, 1 part of Ketjen black, and 1 part of a styrene-butadiene-styrene block copolymer; and the cocoon structured lithium-carbon material comprises a cocoon body formed from single-walled carbon nanotubes and lithium-boron alloy powder with a boron content of 20 wt% contained in the cocoon body.

The method for preparing the composite negative electrode comprises steps of:
(1) high speed dispersing 60 g of lithium-boron alloy powder with an average particle size of 50 µm, 0.15 g of single-walled carbon nanotubes (purchased from OCSiAl) and 300 g of p-xylene (purchased from Aladdin) at a rotation speed of 12000 rpm for 15 min, suction filtering the mixture and oven drying it at 80°C to obtain a cocoon structured lithium-carbon material; where the cocoon structured lithium-carbon material is characterized by SEM, and the characterization result is as shown in Fig. 1; as clearly seen from the figure, the single-walled carbon nanotubes are wound around the surface of the lithium-boron alloy powder to form a cocoon structure which confines the lithium-boron alloy powder;
(2) dry mixing a silicon-carbon material (DXB8 from BTR), Ketjen black and a styrene-butadiene-styrene block copolymer in the parts by weight, and then performing a binder fibrillation in an ultra-high shear device at a temperature 100°C to obtain a mixture; and
(3) mixing the mixture obtained in Step (2) with the cocoon structured lithium-carbon material in the parts by weight in a V-type mixer at a mixing speed of 4000 rpm for 30 min, then hot pressing it at 100°C under a pressure of 30 t to obtain a negative electrode active material layer, and attaching the negative electrode active material layer to a carbon-coated copper foil by pressure bonding to obtain the composite negative electrode. The SEM test result of the test section of the composite negative electrode is as shown in Fig. 2. As clearly seen from the figure, the components in the composite negative electrode are uniformly distributed, and the cocoon structured lithium-carbon material maintains the cocoon structure and is tightly combined with other components.

### Example 10

The present example provides a metal lithium composite negative electrode comprising a copper mesh and negative electrode active material layers on both sides of the copper mesh, wherein the negative electrode active material layer is composed of, in parts by weight: 55 parts of hard carbon, 40 parts of a cocoon structured lithium-carbon material, 2.5 parts of Ketjen black, and 2.5 parts of a styrene-ethylene-butene-styrene block copolymer; and the cocoon structured lithium-carbon material comprises a cocoon body formed from carbon nanofibers and lithium-indium alloy powder with a indium content of 20 wt% contained in the cocoon body.

The method for preparing the composite negative electrode comprises steps of:
(1) high speed dispersing 60 g of lithium-indium alloy powder with an average particle size of 100 µm, 0.06 g of carbon nanofibers (purchased from Aladdin) and 450 g of tetrahydrofuran (purchased from Aladdin) at a rotation speed of 8000 rpm for 20 min, and then spray granulating the mixture with an inlet air temperature of 220°C, an outlet air temperature of 100°C and a pressure of 0.5 MPa to obtain a cocoon structured lithium-carbon material;
(2) dry mixing hard carbon (BHC-400 from BTR), Ketjen black and a styrene-butadiene-styrene block copolymer in the parts by weight, and then performing a binder fibrillation in an ultra-high shear device at a temperature 120°C to obtain a mixture; and
(3) mixing the mixture obtained in Step (2) with the cocoon structured lithium-carbon material in the parts by weight in a drum mixer at a mixing speed of 4000 rpm for 30 min, then hot pressing it at 100°C under a pressure of 30 t to obtain a negative electrode active material layer, and attaching the negative electrode active material layer to a copper mesh by pressure bonding to obtain the composite negative electrode.

### Example 11

The conditions were the same as in Example 9 except that the amount of the single-walled carbon nanotubes in Step (1) was changed to 65 g.

### Example 12

The conditions were the same as in Example 9 except that the amount of the single-walled carbon nanotubes in Step (1) was changed to 0.05 g.

### Example 13

The conditions are the same as in Example 9 except that the parts by weight of the components of the negative electrode active material layer were changed to: 68 parts of the silicon-carbon material, 30 parts of the cocoon structured lithium-carbon material, 1 part of the conductive agent, and 1 part of the binder.

### Example 14

The conditions are the same as in Example 9 except that the parts by weight of the components of the negative electrode active material layer were changed to: 44 parts of the silicon-carbon material, 50 parts of the cocoon structured lithium-carbon material, 3.5 parts of the conductive agent, and 2.5 parts of the binder.

### Example 15

The conditions are the same as in Example 9 except that the lithium-boron alloy powder was replaced with a mixture of metal lithium powder and lithium-boron alloy powder in a mass ratio of metal lithium powder to lithium-boron alloy powder of 1:1.

### Example 16

The conditions were the same as in Example 9 except that the lithium-boron alloy powder was replaced with a mixture of metal lithium powder and lithium-boron alloy powder in a mass ratio of metal lithium powder to lithium-boron alloy powder of 30:1.

### Example 17

The conditions were the same as in Example 9 except that the lithium-boron alloy powder was replaced with a mixture of metal lithium powder and lithium-boron alloy powder in a mass ratio of metal lithium powder to lithium-boron alloy powder of 60:1.

### Comparative Example 4

The conditions were the same as in Example 9 only except that the cocoon structured lithium-carbon material in the negative electrode active material layer was replaced with metal lithium powder. The SEM image of the test section of the composite negative electrode is as shown in Fig. 3. As clearly seen from the figure, the pores between the metal lithium powder and the negative electrode material and conductive agent are relatively large, resulting in poor contact.

### Comparative Example 5

The conditions were the same as in Example 9 only except that the cocoon structured lithium-carbon material in the negative electrode active material layer was replaced with a lithium-boron alloy with a boron content of 20 wt%.

### Comparative Example 6

The conditions were the same as in Example 9 only except that the cocoon structured lithium-carbon material in the negative electrode active material layer was replaced with a mixture of a lithium-boron alloy and single-walled carbon nanotubes, where the single-walled carbon nanotubes and the lithium-boron alloy were randomly distributed in the mixture, and no cocoon structure was formed.

### Comparative Example 7

The conditions were the same as in Example 8 only except that the cocoon structured lithium-carbon material in the negative electrode active material layer was replaced with a metal lithium-lithiophilic framework composite material.

The method for preparing the metal lithium-lithiophilic framework composite material comprises steps of:
(1) uniformly mixing polyvinyl alcohol (from Aladdin Scientific Corp., Shanghai), polystyrene microspheres (from Suzhou Weimai Novel Material Co. Ltd.), carbon nanotubes (Carbon nanotube type: GTC-304 from Shandong Dazhan), isothiazolinone (from Aladdin Scientific Corp., Shanghai) and deionized water in a mass ratio of 5:7:10:10:500 to obtain a slurry with a solid content of 6%;
(2) spray granulating the slurry by a two-fluid atomizer with a carrier gas pressure of 0.3 MPa and an atomization chamber temperature of 220°C;
(3) placing the carbon particles obtained by the above spray granulating in a crucible, and subjecting them to a high temperature treatment at 800°C for 3 hours under the protection of an inert atmosphere; and
(4) mixing the high temperature treated carbon particles with molten metal lithium and stirring the mixture homogeneously to obtain the metal lithium-lithiophilic framework composite material.

The method for preparing the mixture of lithium-boron alloy and single-walled carbon nanotubes comprises steps of:
mechanically stirring 60 g of lithium-boron alloy powder with an average particle size of 50 µm, 0.15 g of single-walled carbon nanotubes (purchased from OCSiAl) and 300 g of p-xylene (purchased from Aladdin) at a speed of 1000 rpm for 15 min, suction filtering the mixture and oven drying it at 80°C to obtain the mixture of lithium-boron alloy and single-walled carbon nanotubes.

Test for material properties:
The negative electrodes provided in Example 8-17 and Comparative Examples 4-7 were respectively assembled with lithium sheets to form batteries for testing the specific capacity, and with NCM811 to form batteries for testing the cycling performance and the rate performance. The test results are shown in Table 1.

**Table 1**

| Negative electrode source | Specific Capacity (mAh/g) | Capacity retention after 100 cycles at 0.2C (%) | Capacity retention after 100 cycles at 0.5C (%) |
|---|---|---|---|
| Example 8 | 1160.38 | 101.24 | 99.82 |
| Example 9 | 1103.64 | 101.01 | 98.31 |
| Example 10 | 1442.99 | 98.55 | 95.64 |
| Example 11 | 798.97 | 99.82 | 98.57 |
| Example 12 | 1104.61 | 98.86 | 96.86 |
| Example 13 | 1330.45 | 101.89 | 98.71 |
| Example 14 | 1832.35 | 102.27 | 98.93 |
| Example 15 | 1176.92 | 101.96 | 98.55 |
| Example 16 | 1245.48 | 102.18 | 99.24 |
| Example 17 | 1247.81 | 100.15 | 98.08 |
| Comparative Example 4 | 1164.39 | 94.27 | 93.11 |
| Comparative Example 5 | 975.79 | 93.97 | 92.67 |
| Comparative Example 6 | 993.28 | 93.58 | 93.28 |
| Comparative Example 7 | 760.93 | 98.50 | 97.21 |

The following observations can be obtained from Table 1.
(1) It can be seen by comparing Example 9 with Examples 11-12 that as more structural carbon material is used in Example 11 than in Example 9, the negative electrode of Example 11 has a lower specific capacity than Example 9; and as less structural carbon material is used in Example 12 than in Example 9, the negative electrode of Example 12 has a higher specific capacity, but has poorer cycling performance and rate performance than Example 9.
(2) It can be seen by comparing Example 9 with Examples 13-14 that by controlling the proportion of the cocoon structured lithium-carbon material in the negative electrode, the composite negative electrodes of Example 13 and Example 14 have better specific capacity, cycling performance and rate performance than Example 9. That is, the compositions, in parts by weight, of the negative electrode material layers in the composite negative electrodes of Example 13 and Example 14 are better than those in Example 9, and can balance the specific capacity, cycling performance and rate performance of the composite negative electrode.
(3) It can be seen by comparing Example 9 with Examples 15-17 that the lithium-containing particles used in Examples 15-17 comprise a mixture of lithium-boron alloy powder and metal lithium powder, and the composite negative electrodes of Examples 15 and 16 have better specific capacity, cycling performance and rate performance than Example 9, because the proportions of the metal lithium powder and the lithium-boron alloy powder are controlled within a suitable range; the composite negative electrode of Example 17 has a higher specific capacity, but poorer cycling performance and rate performance than Example 9, because the lithium-containing particles in Example 10 have a higher proportion of metal lithium powder.
(4) It can be seen by comparing Example 9 with Comparative Examples 4-6 that the composite negative electrode of Example 9 has a lower specific capacity, but better cycling performance and rate performance than Comparative Example 4, because the cocoon structured lithium-carbon material of Example 9 contains lithium-boron alloy which can not only serve as a framework to stabilize the structure of the composite negative electrode, but also guide the deposition of metal lithium, making it less likely to form lithium dendrites; the structural carbon material can also mitigate the volume expansion of the lithium-boron alloy, and adjust the conductivity of the composite negative electrode. In Comparative Example 4, cavities are likely to be formed after the metal lithium powder takes effect, which results in disconnection of the electron pathway. The composite negative electrodes in Comparative Examples 5 and 6 have poorer performances than Example 9, because of no cocoon structure on the surface of the lithium-boron alloy.
(5) It can be seen by comparing Example 8 with Comparative Example 7 that the composite negative electrode of Example 8 has better specific capacity, cycling performance and rate performance than Comparative Example 7, because the metal lithium-lithiophilic framework material in Comparative Example 7 has a lower content of metal lithium (which is limited by the preparation method, where the molten metal lithium is likely to be coated on the surface of porous particles), and the composite negative electrode has a lower specific capacity than Example 8; the lithiophilic framework is inside the metal lithium, mainly functioning to support the metal lithium and adjust the current density rather than confinement and good contact with the negative electrode material and the conductive agent; while the structural carbon material of the cocoon structured lithium-carbon material in the present invention functions to confine the lithium-containing particles, effectively mitigating the problem of volume expansion of the lithium-containing particles; the cocoon structured lithium-carbon material comes into good contact with the negative electrode material and the conductive agent, and the composite negative electrode has a good structural stability.

The applicant states that although the detailed structure features of the present invention are described by means of the above examples, the present invention is not limited to the above detailed structure features, that is, it is not meant that the present invention must be implemented by relying on the above detailed structure features. It will be appreciated by those skilled in the art that any modification of the present invention, equivalent substitution for the components used in the present invention, addition of auxiliary components, and choice on particular mode fall within the protection scope and disclosure of the present invention.

## Claims

1. A negative electrode of a lithium ion battery, **characterized in that** the negative electrode comprises a negative electrode active material layer containing a negative electrode active material and a cocoon structured lithium-carbon material, wherein the cocoon structured lithium-carbon material is dispersed in the negative electrode active material,
wherein the cocoon structured lithium-carbon material comprises a cocoon body formed from a structural carbon material and one or more lithium-containing particles contained in the cocoon body.

2. The negative electrode according to claim 1, **characterized in that** the negative electrode is a prelithiated negative electrode, wherein a mass ratio of the negative electrode active material to the cocoon structured lithium-carbon material is in a range of 1 g: (1-300) mg; and
a mass ratio of the structural carbon material to the lithium-containing particles is in a range of 1: (1-1000).

3. The negative electrode according to claim 2, **characterized in that** the negative electrode active material comprises any one or a combination of at least two selected from the group consisting of graphite, a tin-based material, hard carbon, soft carbon, activated carbon, mesocarbon microbeads, a silicon-carbon material and a silicon-oxygen material; and
the structural carbon material is any one or a combination of at least two selected from the group consisting of a particulate carbon nanomaterial, a linear carbon nanomaterial, and a sheet-like carbon nanomaterial, and the structural carbon material comprises any one or a combination of at least two selected from the group consisting of acetylene black, Ketjen black, Cabot BP2000, Super P, single-walled carbon nanotubes, few-walled carbon nanotubes, multi-walled carbon nanotubes, doped carbon nanotubes, graphene, doped graphene, carbon nanofibers and doped carbon nanofibers;
wherein the doping elements of the doped carbon nanotubes, the doped graphene or the doped carbon nanofibers independently comprise any one or a combination of at least two selected from the group consisting of fluorine, nitrogen, oxygen, phosphorous, silver, silicon, tin, and zinc.

4. The negative electrode according to claim 2, **characterized in that** the lithium-containing particles comprise metal lithium particles and/or lithium alloy particles, wherein the lithium alloy particles comprise metal lithium at a mass content of not less than 70%;
wherein the lithium-containing particles have an average particle size in a range from 1 to 100 µm; and
wherein the lithium alloy particles comprises a binary lithium alloy and/or a ternary lithium alloy powder, wherein the binary lithium alloy powder comprises any one or a combination of at least two selected from the group consisting of lithium-magnesium alloy, lithium-boron alloy, lithium-silver alloy, lithium-indium alloy, lithium-silicon alloy, lithium-aluminum alloy and lithium-tin alloy; and the ternary lithium alloy powder comprises any one or a combination of at least two selected from the group consisting of lithium-tin-silver alloy, lithium-silver-silicon alloy and lithium-boron-zinc alloy.

5. The negative electrode according to claim 2, **characterized in that** the cocoon structure further comprises an organic conducting layer disposed between the lithium-containing particles and the structural carbon material, wherein the organic conducting layer comprises an organic ion conducting agent and a conductive agent;
wherein the conductive agent comprises at least one selected from the group consisting of carbon nanotubes, carbon black, graphene, and acetylene black; and
the organic lithium ion conducting agent comprises any one or a copolymer or mixture of at least two selected from the group consisting of polyethylene oxide, polyethylene glycol, polysiloxane, polytrimethylene carbonate, polycarbonate, polyethylene carbonate, polypropylene carbonate, polyvinylene carbonate, polyvinylidene fluoride, polyacrylonitrile, poly(methyl methacrylate), poly(vinylidene fluoride-co-hexafluoropropylene), polyphenylene sulfide, and p-benzoquinone.

6. A method for preparing the negative electrode of any one of claims 1-5, **characterized in that** the method comprises steps of:
(1) mixing a structural carbon material, lithium-containing particles and an organic solvent to obtain a mixture, and then spray drying the mixture or stirring the mixture at a rotation speed of 5000 rpm or more to obtain a cocoon structured lithium-carbon material; and
(2) mixing a negative electrode active material, a conductive agent and a first binder and then performing a binder fibrillation to obtain a first mixture, then mixing the first mixture and the cocoon structured lithium-carbon material to obtain a second mixture, hot pressing the second mixture into a negative electrode active material layer, and then bonding the negative electrode active material layer with a current collector to obtain the prelithiated negative electrode; or
mixing a negative electrode active material, a conductive agent, a second binder, the cocoon structured lithium-carbon material and an organic solvent to prepare a negative electrode slurry, and then applying the negative electrode slurry on a surface of a current collector to obtain the prelithiated negative electrode.

7. The method according to claim 6, **characterized in that** the organic solvent in Step (1) is any one or a combination of at least two selected from the group consisting of N-methylpyrrolidone, a liquid alkane having 5-10 carbon atoms, benzene, p-xylene, and petroleum ether.

8. The method according to claim 6, **characterized in that** the first binder in Step (2) comprises any one or a combination of at least two selected from the group consisting of polyvinylidene fluoride, vinylidene fluoride-hexafluoropropylene copolymer, polyethylene oxide, polytetrafluoroethylene and sodium carboxymethyl cellulose;
the organic solvent in Step (2) comprises any one or a combination of at least two selected from the group consisting of N-methylpyrrolidone, a liquid alkane having 5-10 carbon atoms, benzene, p-xylene, and petroleum ether;
the conductive agent in Step (2) comprises any one or a combination of at least two selected from the group consisting of acetylene black, Ketjen black, conductive graphite, Cabot carbon black and Super P;
the second binder in Step (2) comprises any one or a combination of at least two selected from the group consisting of polyvinylidene fluoride, butadiene styrene rubber, polystyrene, polyisobutene, styrene-butadiene-styrene block copolymer, and styrene-ethylene-butene-styrene block copolymer; and
a mass ratio of the conductive agent, the first binder or second binder and the negative electrode active material is in a range of (1-10): (1-10): (80-98).

9. The method according to claim 6, **characterized in that** the negative electrode slurry in Step (2) is prepared through steps of:
(a) first mixing the negative electrode active material, the conductive agent, the second binder and the organic solvent, and then adding the cocoon structured lithium-carbon material for a second mixing, to prepare the negative electrode slurry;
wherein the second mixing is performed at a rotation speed of 3000-5000 rpm for 30-60 min; and
(b) applying the negative electrode slurry on the surface of the current collector to obtain the prelithiated negative electrode.

10. The negative electrode according to claim 1, **characterized in that** the negative electrode is a composite negative electrode comprising a current collector and a negative electrode active material layer disposed on at least one side of the current collector, wherein the negative electrode active material layer is composed of, in parts by weight:
| | |
|---|---|
| a negative electrode material | 40-78 parts; |
| a cocoon structured lithium-carbon material | 20-50 parts; |
| a conductive agent | 1-5 parts; and |
| a binder | 1-5 parts; |
wherein a sum of parts by weight of all components in the negative electrode active material layer is 100 parts by weight.

11. The negative electrode according to claim 10, **characterized in that** the negative electrode active material layer is composed of, in parts by weight:
| | |
|---|---|
| a negative electrode material | 44-68 parts; |
| a cocoon structured lithium-carbon material | 30-50 parts; |
| a conductive agent | 1-3.5 parts; and |
| a binder | 1-2.5 parts. |

12. The negative electrode according to claim 10, **characterized in that** the lithium-containing particles comprises metal lithium powder and/or lithium alloy powder;
wherein the lithium alloy powder comprises any one or a combination of at least two selected from the group consisting of lithium-boron alloy, lithium-silver alloy, lithium-tin alloy, lithium-silicon alloy, lithium-zinc alloy, lithium-indium alloy, lithium-aluminum alloy and lithium-magnesium alloy; and
wherein the lithium-containing particles have an average particle size in a range from 1 to 100 µm.

13. The negative electrode according to claim 10, **characterized in that** the structural carbon material comprises a carbon micro/nano material, wherein the carbon micro/nano material comprises any one or a combination of at least two selected from the group consisting of graphene nanosheets, graphene nanobelts, multi-walled carbon nanotubes, single-walled carbon nanotubes, carbon fibers and few-walled carbon nanotubes.

14. The negative electrode according to claim 10, **characterized in that** a mass ratio of the lithium-containing particles to the structural carbon material is in a range of (1-1000):1; and
when the lithium-containing particles comprises metal lithium powder and lithium alloy powder, a mass ratio of the metal lithium powder to the lithium alloy powder is in a range of (0.5-50):1.

15. The negative electrode according to claim 10, **characterized in that** the negative electrode material comprises any one or a combination of at least two selected from the group consisting of graphite, a tin-based material, hard carbon, soft carbon, mesocarbon microbeads, a silicon-carbon material and a silicon-oxygen material;
the conductive agent comprises any one or a combination of at least two selected from the group consisting of acetylene black, Ketjen black, Cabot carbon black, conductive graphite, Super P, carbon nanotubes, carbon fibers and graphene; and
the binder comprises any one or a combination of at least two selected from the group consisting of polyvinylidene fluoride, polytetrafluoroethylene, vinylidene fluoride-hexafluoropropylene copolymer, sodium carboxymethyl cellulose, butadiene styrene rubber, polystyrene, polyisobutene, styrene-butadiene-styrene block copolymer, and styrene-ethylene-butene-styrene block copolymer.

16. A method for preparing the negative electrode of any one of claims 10-15, **characterized in that** the method comprises steps of:
(1) mixing a negative electrode material, a conductive agent and a binder and performing a binder fibrillation to obtain a mixture; and
(2) mixing the mixture obtained in Step (1) and a cocoon structured lithium-carbon material, then hot pressing it into a negative electrode active material layer, and arranging the negative electrode active material layer on at least one side of a current collector to obtain the composite negative electrode.

17. The method according to claim 16, **characterized in that** in Step (1), the binder fibrillation is performed at a temperature in a range from 50 to 150°C.

18. The method according to claim 16, **characterized in that** the mixing in Step (2) is performed at a speed of 2000-5000 rpm for 10-60 min;
the hot pressing in Step (2) is performed at a temperature in a range from 80 to 120°C; and
the hot pressing in Step (2) is performed at a pressure in a range from 10 to 50 t.

19. An energy storage device, **characterized in that** the energy storage device comprises the negative electrode of any one of claims 1-5 or the negative electrode of any one of claims 10-15.
